# FASCICULE DE BREVET EUROPEEN

(11) **EP 1 142 772 B1**
(45) Date de publication et mention de la délivrance du brevet: **17.03.2004**
(21) Numéro de dépôt: 01400873.4
(22) Date de dépôt: 04.04.2001
(51) Int. Cl.: B62D 1/16

(54) **Système de fixation d'une colonne de direction pour un véhicule automobile**
Kraftfahrzeug- Lenksäulenbefestigungssystem
Motor vehicle steering column mounting system

(30) Priorité: 05.04.2000 FR 0004319
(43) Date de publication de la demande: 10.10.2001
(73) Titulaire: Renault s.a.s., 92100 Boulogne Billancourt (FR)
(72) Inventeur: Gault, Sébastien, 92370 Chaville (FR); Perrin, Laurent, 78000 Versailles (FR); Larvor, Philippe, 93110 Rosny Sous Bois (FR); Jouenard, Eric, 75013 Paris (FR)

(56) Documents cités:
- DE-A- 4 232 846
- JP-A- 3 000 567

## Description

L'invention concerne un système de fixation d'une colonne de direction pour véhicule automobile.

Les éléments de direction d'un véhicule automobile, tels que la colonne de direction et le volant sont habituellement supportés, à l'intérieur d'un poste de conduite du véhicule, par une structure qui est fixée d'une part à la traverse inférieure de baie du pare-brise et d'autre part à la paroi de séparation, ou tablier, entre l'habitacle et le compartiment moteur de ce véhicule. Cette structure coopère avec des pattes de fixation portées par la colonne elle-même ou par des flasques intermédiaires, selon que la colonne est fixe ou réglable en position, pour relier cette colonne à la structure.

Or, on constate que lors d'un choc sur l'avant du véhicule, le tablier a tendance à se déformer, de sorte que la colonne remonte en direction du conducteur, ce qui peut causer de graves blessures. En conséquence, les règles pour la sécurité des occupants du véhicule exigent que les risques de remontée de la colonne de direction en cas de choc avant soient limités et même pratiquement supprimés.

Dans ce but, le document FR-A1-2667038 correspondent au preambule de la revendication 1 a proposé une structure de support de direction qui comporte une poutre qui s'étend transversalement entre deux points de fixation sur le véhicule, et solidaire, dans une zone intermédiaire, d'une baie de pare-brise du véhicule, par l'intermédiaire d'un bras de suspension. Au niveau de l'intersection entre le bras de suspension et la poutre, deux flasques espacés, en regard l'un de l'autre, délimitent entre eux un espace de montage pour la colonne de direction.

Pour une bonne rigidité du montage, la fixation de la colonne est effectuée sur les deux flasques de la poutre. Des moyens de fixation peuvent être mis en place sur chaque flasque ou être traversants pour effectuer un serrage simultané de l'ensemble des deux flasques et de la colonne. Dans le premier cas, il est nécessaire de pouvoir accéder à chaque flasque par les deux côtés opposés avec des outils de fixation tels que des visseuses. Ceci n'est pas toujours possible, car l'espace peut être occupé par des éléments de la structure ou par des accessoires déjà montés. Dans le second cas, la colonne de direction doit pouvoir accepter le passage traversant des moyens de fixation tels que des vis ou des goujons, ce qui est contraignant pour la conception de la colonne.

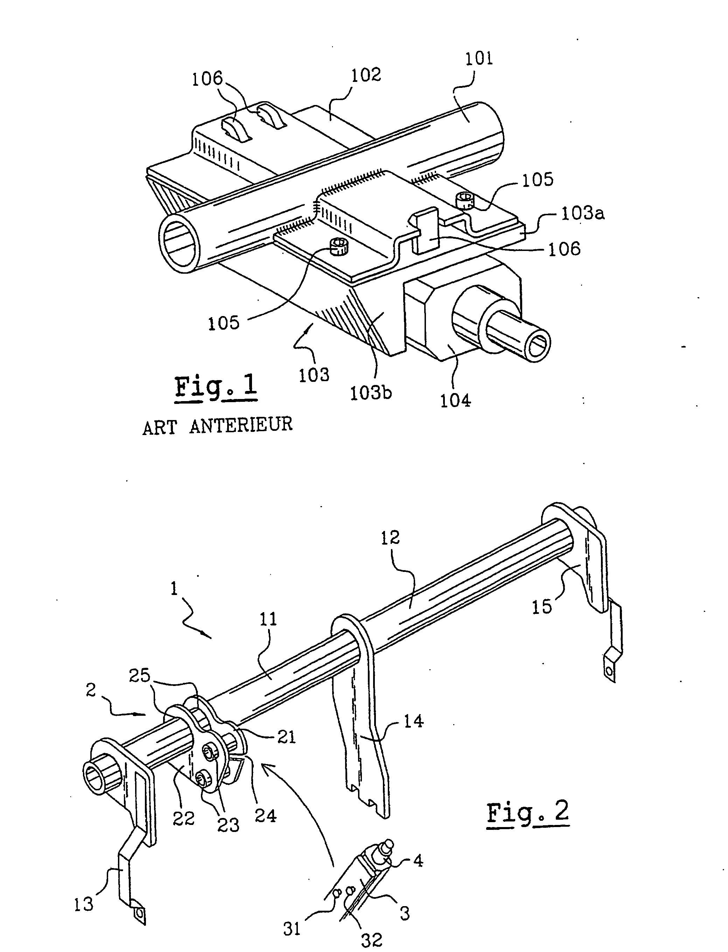

Une autre solution de montage, montrée sur la figure 1, comporte une plaque 102 fixée tangentiellement sur une traverse tubulaire 101, une face de la plaque 102 étant orientée vers le bas et sensiblement parallèle à la direction longitudinale de la colonne 104. Un support de colonne 103, de forme générale en L, est suspendu contre cette plaque 102 par l'une des branches 103a du L, d'une part par des pattes 106 de mise en position lors du montage du support sur la plaque, et d'autre part par des moyens de fixation 105 tels que des vis. La colonne 104 est fixée sur l'autre branche 103b de ce support en L, cette branche 103b s'étendant dans un plan sensiblement vertical. En général, la colonne 104 a en outre des moyens de réglage de son orientation ou de sa position par rapport au support 103.

De même que précédemment, un espace doit être libre au-dessus de la plaque 102 pour la mise en place et la manoeuvre des moyens de fixation 105. Or, cet espace est souvent occupé par la baie de pare-brise. De plus, l'accès par le dessus est pénible pour l'opérateur. Par ailleurs, pour limiter les problèmes de vibration de la masse suspendue que constitue la colonne 104, le support en L 103 doit être conçu de manière à être très rigide. Ceci est obtenu au prix de dimensions importantes, et donc d'une masse importante, ce qui est toujours pénalisant dans un véhicule automobile.

C'est un objectif de l'invention de remédier à ces problèmes. Elle vise à réaliser un système de fixation de colonne léger et présentant une bonne rigidité et avec lequel l'accès aux moyens de fixation sera aisé.

L'invention a pour objet un système de fixation d'une colonne de direction d'un véhicule automobile sur une traverse par l'intermédiaire d'un support de colonne, caractérisé en ce que la traverse comporte une bride qui présente au moins une face d'appui sensiblement perpendiculaire à la direction longitudinale de la traverse, le support de colonne étant fixé par des moyens de fixation sur la face d'appui de la bride.

Grâce à l'invention, le support de colonne est fixé sur la traverse en utilisant un seul espace pour la manoeuvre des moyens de fixation, du côté opposé à la face d'appui, contrairement au cas du document FR-A1-2667038 qui nécessite l'accès de deux côtés de la colonne. Cet espace n'est pas limité par la baie de pare-brise comme dans le cas de la figure 1. De plus, le positionnement d'un support de colonne contre une face d'appui est moins délicat que l'insertion du support de colonne entre deux flasques. De même, les tolérances de fabrication sur l'épaisseur du support de colonne peuvent être plus larges.

L'invention permet de concevoir plus simplement les colonnes de direction, car le système de fixation peut être mis en oeuvre pour tout type de colonne de direction, avec ou sans réglage. Les adaptations à réaliser d'un modèle de véhicule à l'autre sont limitées.

D'autres faces d'appui, par exemple décalées entre elles, peuvent permettre un positionnement plus précis du support de colonne.

Préférentiellement, les moyens de fixation du support de colonne sont des vis mises en place depuis la face de la bride opposée à ladite face d'appui de la bride.

De manière avantageuse, la bride comporte une rainure qui coopère avec des moyens de positionnement pour positionner et soutenir le support de colonne au montage. Cette rainure permet, en coopérant avec le support de colonne, de positionner celui-ci de manière à ce que les moyens de fixation se montent facilement, sans qu'il soit besoin d'ajuster la position du support de colonne. De plus, le soutien du support lors de son montage dispense de l'utilisation d'accessoires de levage tels qu'un palan par exemple.

Préférentiellement, les moyens de positionnement sont deux tétons fixés sur le support de colonne, chaque téton comportant une gorge avec laquelle la rainure coopère. La gorge de ces tétons s'insère dans la rainure, alors que la partie large des tétons réalise un arrêt contre l'extraction des tétons hors de la rainure dans une direction perpendiculaire à la rainure. De plus, l'un des tétons détermine de manière unique la position du support de colonne lorsque ledit téton vient en contact avec l'extrémité de la rainure.

D'une manière préférentielle, la bride comporte deux flasques sensiblement parallèles liés rigidement entre eux. La bride a ainsi une très bonne rigidité avec une légèreté avantageuse.

Selon d'autres caractéristiques :
- les flasques sont fixés sur la traverse par soudure.
- la bride est fixée sur la traverse par un emmanchement forcé sur la traverse.
- les flasques sont liés entre eux par des entretoises.
- un des flasques au moins comporte un dévoiement. De cette manière, la distance d'implantation entre les deux flasques sur la traverse peut être augmentée pour améliorer la rigidité du montage de la bride, sans augmenter sensiblement la masse de la bride. Pour cela, le dévoiement est situé entre la partie du flasque qui est fixée sur la traverse et la partie qui comporte les entretoises de telle sorte que les plans de ces deux parties sont parallèles entre eux et décalés. Si le dévoiement n'est pas rectiligne, il apportera en outre de la rigidité au flasque.
- les deux flasques sont reliés sur leurs bords par une nervure.
- les vis traversent des entretoises fixées sur la bride.
- la bride est une section d'un profilé métallique.

L'invention sera mieux comprise et d'autres particularités et avantages apparaîtront à la lecture de la description qui va suivre, la description faisant référence aux dessins annexés parmi lesquels :
- la figure 1 est une vue, en perspective, d'un système de fixation d'un support de colonne selon l'art antérieur, déjà décrit dans la présentation de l'état de la technique ;
- la figure 2 est une vue, en perspective, d'une traverse comportant une bride conforme à l'invention ;
- la figure 3 est une vue, en perspective, d'un système de fixation d'un support de colonne conforme à l'invention ;
- les figures 4 à 8 sont des vues en perspective de différents modes de réalisation de la bride.

Une traverse 1 s'étend tranversalement par rapport au véhicule entre deux montants latéraux 13, 15. Dans ce mode de réalisation, la traverse 1 comporte également une jambe centrale 14 qui réalise la jonction entre une traverse de conducteur 11 et une traverse de passager 12, lesquelles sont placées devant les places destinées respectivement au conducteur et au passager avant. Les montants latéraux 13, 15 et la jambe centrale 14 sont destinés à être fixés sur la structure du véhicule.

La traverse du conducteur 11 est formée par un tube, par exemple de section circulaire, et comporte une bride 2 qui s'étend sensiblement perpendiculairement à l'axe du tube. Selon un premier mode de réalisation de l'invention, montrée sur la figure 2, la bride 2 comporte deux flasques 21, 22 sensiblement parallèles entre eux reliés par deux entretoises 23 creuses, d'axes sensiblement perpendiculaires aux flasques 21, 22. Chaque flasque 21, 22 comporte une ouverture circulaire 25 par laquelle passe la traverse 11 et est soudé sur la traverse 11 le long du bord de ladite ouverture 25. Les entretoises 23 sont également soudées sur chacun des flasques ou montées serrées dans les flasques. Un premier des flasques 21 comporte une rainure 24, qui peut être par exemple inclinée vers le bas d'environ 30° par rapport à l'horizontale.

La bride 2 ainsi conçue a une très bonne rigidité. En effet, l'implantation des flasques 21, 22 sur la traverse avec un écartement important entre eux lui assure une bonne stabilité. La liaison des flasques par l'intermédiaire des entretoises 23 confère à la bride une rigidité très supérieure à la somme des rigidités de chacun des flasques.

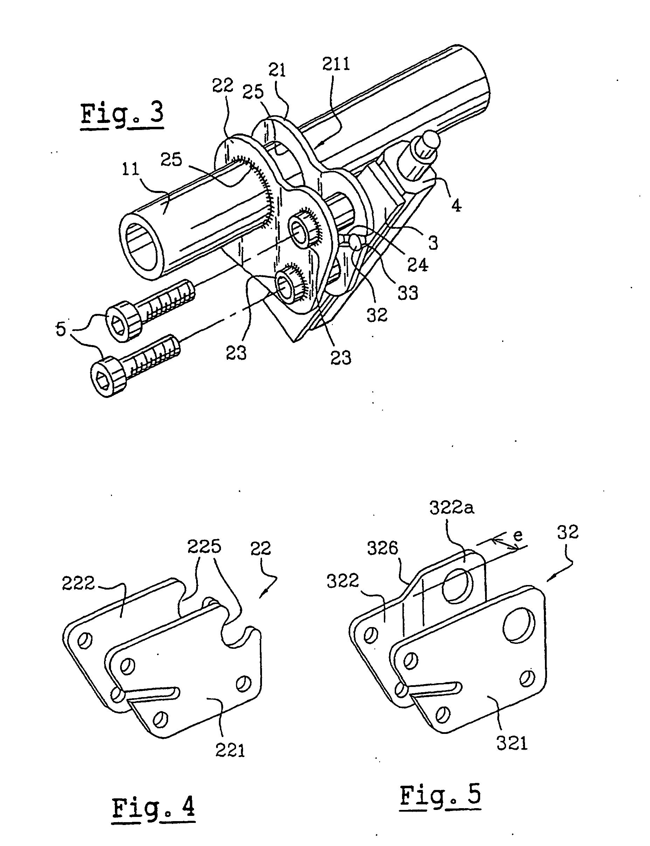

En se référant à la figure 3, un support de colonne 3 de forme générale plane est placé contre une face d'appui 211 du premier flasque 21. Deux tétons 31, 32 comportent chacun une gorge 33 et sont fixés sur le support de colonne 3. Les gorges des tétons sont insérées dans la rainure. Le fait que la rainure soit inclinée vers le bas conduit à ce que, sous l'effet du poids du support, les tétons glissent dans la rainure jusqu'à ce que le premier téton 31 soit en butée à l'extrémité de la rainure, ce qui réalise un positionnement unique du support de colonne. Une vis 5 traverse chacune des entretoises 23 et est vissée dans le support de colonne 3 pour serrer et fixer ce dernier contre la face d'appui 211.

La colonne de direction 4 est montée sur le support de colonne 3 par des moyens de type connu en soi, non montrés. Par exemple, elle peut être articulée sur le support à une extrémité et comporter des moyens de serrage à l'autre extrémité pour que le conducteur puisse ajuster la hauteur du volant de direction. Elle peut également comporter des moyens d'ajustage en longueur, également de type connu en soi, non montrés, pour approcher le volant vers le conducteur ou l'éloigner.

La figure 4 montre un autre mode de réalisation de la bride selon l'invention, dans lequel les flasques 221, 222 de la bride 22 n'ont pas une ouverture circulaire, mais une découpe 225 en demi-cercle. Cette découpe 225 est ajustée à la forme de la traverse 11 et chaque flasque 221, 222 est soudé sur la traverse le long de cette découpe 225.

Dans le mode de réalisation de la figure 5, le deuxième flasque 322 comporte un dévoiement 326 qui permet à la partie 322a du flasque comportant l'ouverture circulaire d'être distante du premier flasque 321 d'une distance augmentée d'une distance e, tandis que la longueur des entretoises, et donc leur masse, n'est pas augmentée. L'implantation des flasques 321, 322 sur la traverse avec un écartement augmenté assure à la bride 32 une meilleure stabilité.

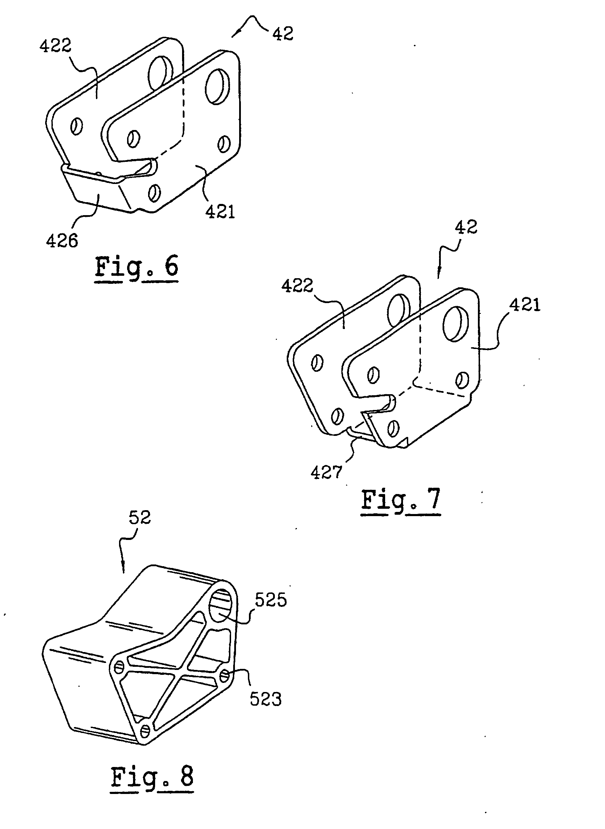

Les figures 6 et 7 montrent deux autres modes de réalisation de l'invention, dans lesquels les deux flasques 421, 422 sont reliés entre eux par une nervure 426, 427. Dans ces modes de réalisation, les flasques et la nervure sont réalisés d'une seule pièce par découpage puis pliage. La nervure 426, 427 pourrait également être fixée sur les deux flasques 421, 422 par soudure. Ces modes de réalisation augmentent la rigidité de la bride et facilitent le montage. En effet, lors de la soudure de la bride 42 sur la traverse, les deux flasques sont maintenus en position relative par la nervure.

Dans un autre mode de réalisation, la bride 52 montrée sur la figure 8 est issue d'un profilé métallique, obtenu par exemple par l'extrusion d'un alliage léger, et coupé selon des plans perpendiculaires à sa direction longitudinale. La section du profilé comporte des tubes 523 dans lesquelles des vis pourront passer pour la fixation du support de colonne. Un autre tube de fixation 525 est prévu pour la fixation de la bride 52 sur la traverse, par montage avec un emmanchement serré.

L'invention n'est pas limitée aux modes de réalisation qui ont été décrits uniquement à titre d'exemples.

La traverse peut être limitée à la partie située face au conducteur jusqu'à la jambe centrale.

Si la traverse s'étant entre les montants latéraux, la jambe centrale n'est pas indispensable.

La section de la traverse n'est pas nécessairement circulaire, mais elle peut être quelconque. Les ouvertures 225 seront adaptées en conséquence.

## Revendications

1. Système de fixation d'une colonne de direction (4) d'un véhicule automobile sur une traverse (11) par l'intermédiaire d'un support de colonne (3), **caractérisé en ce que** la traverse (11) comporte une bride (2) qui présente une seule face d'appui (211) sensiblement perpendiculaire à la direction longitudinale de la traverse (11), le support de colonne (3) étant fixé par des moyens de fixation (5) sur la face d'appui (211) de la bride (2).

2. Système de fixation selon la revendication 1, **caractérisé en ce que** les moyens de fixation du support de colonne sont des vis (5) mises en place depuis la face de la bride opposée à ladite face d'appui (211) de la bride (2).

3. Système de fixation selon la revendication 1 ou 2, **caractérisé en ce que** la bride (2) comporte une rainure (24) avec des moyens de positionnement (31, 32) pour positionner et soutenir le support de colonne (3) au montage.

4. Système de fixation selon la revendication 3, **caractérisé en ce que** les moyens de positionnement sont deux tétons (31, 32) fixés sur le support de colonne (3), chaque téton (31, 32) comportant une gorge (33) avec laquelle la rainure (24) coopère.

5. Système de fixation selon l'une quelconque des revendications 1 à 4, **caractérisé en ce que** la bride (2) comporte deux flasques (21, 22) sensiblement parallèles liés rigidement entre eux.

6. Système de fixation selon la revendication 5, **caractérisé en ce que** les flasques (21, 22) sont fixés sur la traverse par soudure.

7. Système de fixation selon la revendication 5 ou 6 **caractérisé en ce que** les flasques (21, 22) sont liés entre eux par des entretoises.

8. Système de fixation selon les revendications 2 et 7, **caractérisé en ce que** les vis (5) traversent des entretoises (23) fixées sur la bride (2).

9. Système de fixation selon l'une quelconque des revendications 5 à 8, **caractérisé en ce qu'**un des flasques (322) au moins comporte un dévoiement (326).

10. Système de fixation selon l'une quelconque des revendications 5 à 9, **caractérisé en ce que** les deux flasques (421, 422) sont reliés sur leurs bords par une nervure (426).

11. Système de fixation selon la revendication 1, **caractérisé en ce que** la bride (2) est fixée sur la traverse (11) par l'emmanchement forcé d'un tube (525) sur la traverse (11).

12. Système de fixation selon la revendication 1 ou 11, **caractérisé en ce que** la bride (52) est une section d'un profilé métallique.

## Patentansprüche

1. Befestigungssystem einer Lenksäule (4) eines Kraftfahrzeugs an einem Querträger (11) über einen Lenksäulenträger (3),
**dadurch gekennzeichnet, dass**
der Querträger (11) einen Flansch (2) aufweist, der eine einzige, im Wesentlichen zu der longitudinalen Richtung des Querträgers (11) rechtwinklige Abstützfläche (211) aufweist, wobei der Lenksäulenträger (3) über Befestigungsmittel (5) an der Abstützfläche (211) des Flanschs (2) befestigt ist.

2. Befestigungssystem gemäß Anspruch 1, **dadurch gekennzeichnet, dass** die Befestigungsmittel des Lenksäulenträgers Schrauben (5) sind, die von der Fläche des Flansches, gegenüberliegend zu der Abstützfläche (211) des Flansches (2), eingesetzt sind.

3. Befestigungssystem gemäß Anspruch 1 oder 2, **dadurch gekennzeichnet, dass** der Flansch (2) eine Nut (24) mit Positioniermitteln (31, 32) zum Positionieren und Abstützen des Lenksäulenträgers (3) bei der Montage aufweist.

4. Befestigungssystem gemäß Anspruch 3, **dadurch gekennzeichnet, dass** die Positioniermittel zwei Ansätze (31, 32) sind, welche an dem Lenksäulenträger (3) befestigt sind, wobei jeder Ansatz (31, 32) eine Auskehlung (33) aufweist, mit welcher die Nut (24) zusammenwirkt.

5. Befestigungssystem gemäß irgendeinem der Ansprüche 1 bis 4, **dadurch gekennzeichnet, dass** der Flansch (2) zwei im Wesentlichen parallele Flanschteile (21, 22) aufweist, welche starr untereinander verbunden sind.

6. Befestigungssystem gemäß Anspruch 5, **dadurch gekennzeichnet, dass** die Flanschteile (21, 22) an dem Querträger durch Schweißen befestigt sind.

7. Befestigungssystem gemäß Anspruch 5 oder 6, **dadurch gekennzeichnet, dass** die Flanschteile (21, 22) untereinander durch Stege verbunden sind.

8. Befestigungssystem gemäß den Ansprüchen 2 und 7, **dadurch gekennzeichnet, dass** die Schrauben (5) die Stege (23), welche an dem Flansch (2) befestigt sind, durchqueren.

9. Befestigungssystem gemäß irgendeinem der Ansprüche 5 bis 8, **dadurch gekennzeichnet, dass** einer der Flanschteile (322) mindestens eine schiefe Neigung (326) aufweist.

10. Befestigungssystem gemäß irgendeinem der Ansprüche 5 bis 9, **dadurch gekennzeichnet, dass** die zwei Flanschteile (421, 422) an ihren Rändern durch eine Rippe (426) verbunden sind.

11. Befestigungssystem gemäß Anspruch 1, **dadurch gekennzeichnet, dass** der Flansch (2) an dem Querträger (11) durch kraftschlüssiges Aufpressen eines Rohres (525) an dem Querträger (11) befestigt ist.

12. Befestigungssystem gemäß Anspruch 1 oder 11, **dadurch gekennzeichnet, dass** der Flansch (52) ein Abschnitt eines metallischen Profilteils ist.

## Claims

1. A system for fixing a steering column (4) of a motor vehicle to a transverse member (11) by way of a column support (3) **characterised in that** the transverse member (11) comprises a collar (2) having a single support face (211) substantially perpendicular to the longitudinal direction of the transverse member (11), the column support (3) being fixed to the support face (211) of the collar (2) by fixing means (5).

2. A fixing system according to claim 1 **characterised in that** the column support fixing means are screws (5) which are set in position from the face of the collar which is opposite to the support face (211) of the collar (2).

3. A fixing system according to claim 1 or claim 2 **characterised in that** the collar (2) comprises a slot (24) with positioning means (31, 32) for positioning and supporting the column support (3) upon assembly.

4. A fixing system according to claim 3 **characterised in that** the positioning means are two studs (31, 32) fixed on the column support (3), each stud (31, 32) comprising a groove (33) with which the slot (24) co-operates.

5. A fixing system according to any one of claims 1 to 4 **characterised in that** the collar (2) comprises two substantially parallel side plates (21, 22) rigidly connected together.

6. A fixing system according to claim 5 **characterised in that** the side plates (21, 22) are fixed to the transverse member by welding.

7. A fixing system according to claim 5 or claim 6 **characterised in that** the side plates (21, 22) are connected together by bracers.

8. A fixing system according to claims 2 and 7 **characterised in that** the screws (5) pass through bracers (23) fixed to the collar (2).

9. A fixing system according to any one of claims 5 to 8 **characterised in that** one of the side plates (322) at least comprises a slope portion (326).

10. A fixing system according to any one of claims 5 to 9 **characterised in that** the two side plates (421, 422) are connected at their edges by a rib (426).

11. A fixing system according to claim 1 **characterised in that** the collar (2) is fixed on the transverse member (11) by a tube (525) being a force fit on the transverse member (11).

12. A fixing system according to claim 1 or claim 11 **characterised in that** the collar (52) is a section of a metal shaped member.
